# FASCICULE DE BREVET EUROPEEN

(11) **EP 2 961 712 B1**
(45) Date de publication et mention de la délivrance du brevet: **17.11.2021**
(21) Numéro de dépôt: 14710043.2
(22) Date de dépôt: 27.02.2014
(51) Int. Cl.: C03C 17/36, B23K 26/30, B23K 26/00

(54) **PROCEDE DE TRAITEMENT THERMIQUE D'UN REVÊTEMENT**
VERFAHREN ZUR WÄRMEBEHANDLUNG EINER BESCHICHTUNG
METHOD FOR HEAT-TREATING A COATING

(30) Priorité: 01.03.2013 FR 1351840
(43) Date de publication de la demande: 06.01.2016
(73) Titulaire: SAINT-GOBAIN GLASS FRANCE, 92400 Courbevoie (FR)
(72) Inventeur: CANOVA, Lorenzo, F-75007 Paris (FR); SCHWEITZER, Jean Philippe, F-60300 Chamant (FR); BRAJER, Xavier, F-95240 Cormeilles En Parisis (FR)
(74) Mandataire: Saint-Gobain Recherche
(86) Numéro de dépôt international: PCT/FR2014/050431
(87) Numéro de publication internationale: WO 2014/132000

(56) Documents cités:
- EP-A2- 1 201 610
- WO-A1-2010/142926
- WO-A1-2012/120238
- DE-A1- 2 735 231
- DE-A1- 3 820 809
- FR-A1- 2 963 342
- JP-A- 2000 133 810
- US-A- 5 714 207
- US-A- 5 840 118
- US-A1- 2005 121 426
- US-A1- 2006 166 537
- US-A1- 2011 053 302

## Description

L'invention se rapporte au traitement thermique de substrats munis de revêtements à l'aide d'un rayonnement laser.

Il est connu dans le domaine de la microélectronique de traiter thermiquement des revêtements (par exemple en silicium) déposés sur des substrats à l'aide de lignes laser focalisées, typiquement des lasers excimères émettant dans l'ultraviolet. Ces procédés sont couramment employés pour obtenir du silicium polycristallin à partir de silicium amorphe, par fusion locale du silicium et recristallisation au refroidissement. Traditionnellement, l'excellente planéité des substrats utilisés en microélectronique, leur faible taille, et l'environnement industriel typique dans ce type d'industrie permettent de positionner très précisément le substrat au foyer du laser afin de traiter de manière homogène et optimale la totalité du substrat. Les faibles vitesses de traitement autorisent l'emploi, pour le déplacement des substrats, de systèmes tabulaires sur coussin d'air. Si besoin, des systèmes permettant d'asservir la position du substrat par rapport au foyer du laser peuvent corriger d'éventuels défaut de planéité ou la présence de vibrations à basse fréquence. Les systèmes d'asservissement sont compatibles avec les faibles vitesses de traitement employées.

Les traitements par ligne laser sont également envisagés pour traiter thermiquement des couches sur verre ou substrat organique polymérique pour des applications industrielles différentes : on peut citer à titre d'exemples la production de vitrages autonettoyants comprenant des revêtements à base de TiO₂, la production de vitrages bas-émissifs contenant un substrat de verre revêtu d'un empilement comprenant au moins une couche d'argent, décrite dans la demande WO2010/142926, ou la production de substrats de grande taille pour cellules photovoltaïques comprenant des couches minces conductrices et transparentes (TCO), décrite dans la demande WO2010/139908, ainsi que la production de matériau semi-conducteur, décrite dans la demande JP2000133810.

Le contexte industriel et économique est ici totalement différent. Typiquement, les substrats à traiter peuvent être de très grandes feuilles de verre dont la surface est de l'ordre de 6*3 m², donc dont la planéité ne peut être contrôlée de manière précise (par exemple à moins de +/- 1 mm), déplacées à grande vitesse (parfois de l'ordre de 10 m/minute ou plus) sur des convoyeurs industriels à la sortie de machines de dépôt (par exemple par pulvérisation cathodique), donc dans un environnement industriel générant des vibrations pouvant être importantes. De ce fait, la position de chaque point du revêtement à traiter par rapport au plan focal du laser peut varier de manière importante, entraînant de fortes hétérogénéités de traitement. Les grandes vitesses de déplacement des substrats rendent extrêmement délicates voire impossibles la mise en place de systèmes d'asservissement mécanique de la position du substrat.

Les inventeurs ont pu mettre en évidence que lors du passage sous la ligne laser, le substrat se déformait légèrement dans une zone restreinte, typiquement de l'ordre de la dizaine de centimètre dans la direction de défilement. Cette déformation, même très légère, par exemple de l'ordre de quelques centaines de micromètres en direction de la ligne laser, décale le revêtement par rapport au foyer du laser, et s'ajoute aux défauts de planéité et aux vibrations dues au convoyage. Sans vouloir être lié par une quelconque théorie scientifique, il semblerait que la chaleur générée par la ligne laser diffuse dans le substrat sur une profondeur de quelques dizaines de micromètres, le gradient thermique généré induisant un moment de flexion d'autant plus important que l'épaisseur du substrat est faible.

L'invention a pour but d'obvier à ce problème.

A cet effet, l'invention a pour objet un procédé de traitement thermique d'un revêtement déposé sur au moins une partie d'une première face d'un substrat comprenant une première face et une deuxième face opposée à ladite première face, dans lequel on traite ledit revêtement au moyen d'un rayonnement laser focalisé sur ledit revêtement sous la forme d'une ligne laser s'étendant selon une première direction, ledit traitement thermique étant tel que l'on crée dans une seconde direction transverse à ladite première direction un mouvement de déplacement relatif entre ledit substrat et ladite ligne laser, ledit procédé étant caractérisé en ce que l'on chauffe localement ladite deuxième face à une température d'au moins 30°C dans une zone de chauffage additionnel s'étendant en regard de ladite ligne laser sur une longueur d'au moins 10 cm selon ladite seconde direction, à l'aide d'au moins un moyen de chauffage additionnel disposé du côté opposé à ladite ligne laser par rapport audit substrat, la largeur moyenne de la ligne laser est comprise dans un domaine allant de 40 à 100 micromètres.

Un autre objet de l'invention est un procédé d'obtention d'un substrat munis d'un revêtement sur au moins une partie d'une première face comprenant une étape de dépôt dudit revêtement sur ladite première face puis une étape de traitement thermique dudit revêtement selon le procédé décrit précédemment.

Un autre objet de l'invention est un dispositif de mise en œuvre du procédé selon l'invention comprenant au moins une source laser, des moyens de mise en forme et de redirection capables de générer un rayonnement laser focalisé sur un revêtement, déposé sur une première face d'un substrat, sous la forme d'une ligne laser s'étendant selon une première direction, des moyens de déplacement aptes à créer en fonctionnement un mouvement de déplacement relatif entre ledit substrat et ladite ligne laser, et des moyens de chauffage additionnel disposés du côté opposé à ladite ligne laser par rapport audit substrat aptes à chauffer localement la deuxième face dudit substrat à une température d'au moins 30°C sur une zone de chauffage additionnel s'étendant en regard de ladite ligne laser sur une longueur d'au moins 10 cm selon ladite seconde direction.

Les inventeurs ont pu mettre en évidence que simultanément au traitement laser, l'application d'un chauffage additionnel modéré sur une zone bien précise de la face opposée à la face traitée (appelée « zone de chauffage additionnel ») en regard de la ligne laser, mais de dimension bien plus importante que celle de la ligne laser, permettait de réduire voire de supprimer la déformation thermomécanique susmentionnée. Par l'expression « en regard », on entend de préférence que la zone de chauffage additionnel est traversée par la normale au substrat passant par la ligne laser ou tout du moins en est proche (la partie la plus en amont de la zone de chauffage additionnel étant éloignée d'au plus quelques centimètres, typiquement 5 cm, voire 1 cm de cette normale). Par l'expression « moyen de chauffage additionnel », on entend que l'on utilise un moyen de chauffage autre que le laser. En particulier, le moyen de chauffage ne peut être constitué par la réflexion de la partie du rayonnement laser transmise à travers le substrat, tel que décrit dans la demande WO2012/120238.

De préférence, le procédé selon l'invention possède au moins une des caractéristiques préférées qui suivent, selon toutes les combinaisons possibles :
- la première direction (direction de la ligne laser) est de préférence perpendiculaire à la seconde direction (que l'on appellera aussi direction de déplacement).
- la vitesse du mouvement de déplacement relatif entre le substrat et la ligne laser est d'au moins 4 m/min, notamment 5 m/min et même 6 m/min ou 7 m/min, ou encore 8 m/min et même 9 m/min ou 10 m/min.
- on chauffe localement la deuxième face sur une zone de chauffage additionnel s'étendant en regard de la ligne laser sur une longueur d'au moins 20, notamment 30 cm et même 35 cm selon la seconde direction (direction de déplacement). Cette longueur est avantageusement d'au plus 80 cm, notamment 60 cm et même 50 cm. Il s'est en effet avéré inutile de chauffer une zone trop grande.
- on chauffe localement la deuxième face sur une zone s'étendant en regard de la ligne laser sur une largeur égale à la longueur de la ligne laser selon la première direction.
- la zone de chauffage additionnel possède dans la première direction une largeur égale à la longueur de la ligne laser et dans la seconde direction une longueur d'au moins 20, notamment 30 cm et même 35 cm, et d'au plus 80 cm, notamment 60 cm et même 50 cm.
- la zone de chauffage additionnel est telle que le rapport entre sa surface s'étendant en aval de la ligne laser et sa surface s'étendant en amont de la ligne laser est compris dans un domaine allant de 40 :60, notamment 50 :50, à 80 :20, voire 90 :10. On entend par « aval » la zone du substrat venant d'être traitée par la ligne laser, autrement dit la zone située après la ligne laser dans le sens du procédé. C'est en effet dans cette zone que la déformation est la plus importante et qu'il convient de la compenser au maximum.
- la longueur de la ligne laser est d'au moins 0,8 m ou 1 m, notamment 2 m et même 3 m.
- la largeur moyenne de la ligne laser est d'au moins 35 micromètres, notamment comprise dans un domaine allant de 40 à 100 micromètres ou de 40 à 70 micromètres.
- on chauffe localement la deuxième face à une température d'au moins 40°C, voire 50°C dans la zone de chauffage additionnel.
- la température maximale subie par chaque point du revêtement lors du traitement thermique est d'au moins 300°C, notamment 350°C, voire 400°C, et même 500°C ou 600°C. La température maximale est normalement subie au moment où le point du revêtement considéré passe sous la ligne laser. A un instant donné, seuls les points de la surface du revêtement situés sous la ligne laser et dans ses environs immédiats (par exemple à moins d'un millimètre) sont normalement à une température d'au moins 300°C. Pour des distances à la ligne laser (mesurées selon la seconde direction) supérieures à 2 mm, notamment 5 mm, y compris en aval de la ligne laser, la température du revêtement est normalement d'au plus 50°C, et même 40°C ou 30°C.
- chaque point du revêtement subit le traitement thermique (ou est porté à la température maximale) pendant une durée comprise dans un domaine allant de 0,05 à 10 ms, notamment de 0,1 à 5 ms, ou de 0,1 à 2 ms. Cette durée est fixée à la fois par la largeur de la ligne laser et par la vitesse de déplacement relatif entre le substrat et la ligne laser.
- la différence relative ΔT (T₂ - T₁) entre la température moyenne T₂ de la deuxième face du substrat dans la zone de chauffage additionnel et la température moyenne T₁ du revêtement dans la zone de même surface que ladite zone de chauffage additionnel et exactement opposée à ladite de zone de chauffage additionnel est d'au moins 0, notamment +5°C, voire +10°C ou +15°C, ce particulièrement pour des épaisseurs de substrat de 3 à 5 mm. La différence relative ΔT est avantageusement d'au moins +15°C, notamment +20°C ou même +30°C en particulier pour des épaisseurs de substrats de 1 à 3 mm. La différence relative ΔT est avantageusement d'au plus +100°C, notamment +50°C. Les températures sont typiquement mesurées à l'aide d'une caméra infrarouge en différents points du revêtement ou de la deuxième face, par exemple 5 ou 10 points, de manière à établir une moyenne arithmétique. Typiquement, pour des températures moyennes T₁ de 30°C, la température T₂ de la deuxième face sera d'au moins 38 ou 40°C.

Le ou chaque moyen de chauffage additionnel est de préférence choisi parmi les moyens de chauffage par rayonnement, les moyens de chauffage par convection, les moyens de chauffage par conduction, ou l'une quelconque de leurs combinaisons.

Parmi les moyens de chauffage par rayonnement, on peut notamment citer les moyens de chauffage par rayonnement infrarouge, par exemples les lampes infrarouge.

Parmi les moyens de chauffage par convection, on peut notamment citer les buses envoyant un gaz chaud, typiquement de l'air chaud.

Parmi les moyens de chauffage par conduction, on peut notamment citer une surface chaude, par exemple un rouleau chauffé, au contact duquel la deuxième face du substrat va se trouver. Le rouleau peut être chauffé par différentes techniques, par exemple par effet Joule, ou peut être chauffé par le rayonnement laser transmis au travers du substrat, donc sans apport d'énergie supplémentaire. La surface chaude peut aussi être un revêtement, typiquement absorbant, par exemple en graphite, déposé sur la deuxième face du substrat et chauffé indirectement par le rayonnement laser. Pour ce faire, il est possible de réfléchir de manière diffuse la partie du rayonnement laser transmise au travers du substrat.

De préférence, le substrat, qui est généralement sensiblement horizontal, se déplace sur un convoyeur en regard de la ou chaque ligne laser, la ou chaque ligne laser étant fixe et disposée selon une première direction sensiblement perpendiculairement à la direction du déplacement (seconde direction). La ou chaque ligne laser peut être disposée au-dessus et/ou en-dessous du substrat. Les moyens de chauffage additionnel sont quant à eux disposés du côté opposé à la ligne laser par rapport au substrat. Typiquement, on dispose la ligne laser au-dessus du substrat et les moyens de chauffage additionnel en-dessous du substrat.

D'autres modes de réalisation sont bien entendu possibles. Par exemple, le substrat peut être fixe, la ou chaque ligne laser et les moyens de chauffage additionnel étant déplacés en regard du substrat, notamment à l'aide d'au moins un portique mobile. La ou chaque ligne laser peut aussi ne pas être disposée perpendiculairement à la direction de déplacement, mais en biais, selon tout angle possible. Le substrat peut également être déplacé sur un plan qui n'est pas horizontal, mais vertical, ou selon toute orientation possible.

Le rayonnement laser est de préférence généré par des modules comprenant une ou plusieurs sources laser ainsi que des optiques de mise en forme et de redirection.

Les sources laser sont typiquement des diodes laser ou des lasers à fibre ou à disque. Les diodes laser permettent d'atteindre de manière économique de fortes densités de puissance par rapport à la puissance électrique d'alimentation, pour un faible encombrement. L'encombrement des lasers à fibres est encore plus réduit, et la puissance linéique obtenue peut être encore plus élevée, pour un coût toutefois plus important.

Le rayonnement issu des sources laser est de préférence continu.

La longueur d'onde du rayonnement de la ou chaque ligne laser est de préférence comprise dans un domaine allant de 800 à 1100 nm, notamment de 800 à 1000 nm. Des diodes laser de puissance émettant à une longueur d'onde choisie parmi 808 nm, 880 nm, 915 nm, 940 nm ou 980 nm se sont révélées particulièrement bien appropriées.

Les optiques de mise en forme et de redirection comprennent de préférence des lentilles et des miroirs, et sont utilisées comme moyens de positionnement, d'homogénéisation et de focalisation du rayonnement.

Les moyens de positionnement ont pour but le cas échéant de disposer selon une ligne les rayonnements émis par les sources laser. Ils comprennent de préférence des miroirs. Les moyens d'homogénéisation ont pour but de superposer les profils spatiaux des sources laser afin d'obtenir une puissance linéique homogène tout au long de la ligne. Les moyens d'homogénéisation comprennent de préférence des lentilles permettant la séparation des faisceaux incidents en faisceaux secondaires et la recombinaison desdits faisceaux secondaires en une ligne homogène. Les moyens de focalisation du rayonnement permettent de focaliser le rayonnement sur le revêtement à traiter, sous la forme d'une ligne de longueur et de largeur voulues. Les moyens de focalisation comprennent de préférence une lentille convergente.

Lorsqu'une seule ligne laser est utilisée, la longueur de la ligne est avantageusement égale à la largeur du substrat. Cette longueur est typiquement d'au moins 1 m, notamment 2 m et même 3 m. On peut également utiliser plusieurs lignes, disjointes ou non, mais disposées de manière à traiter toute la largeur du substrat. Dans ce cas, la longueur de chaque ligne laser est de préférence d'au moins 10 cm ou 20 cm, notamment comprise dans un domaine allant de 30 à 100 cm, notamment de 30 à 75 cm, voire de 30 à 60 cm.

On entend par « longueur » de la ligne la plus grande dimension de la ligne, mesurée sur la surface du revêtement dans la première direction, et par « largeur » la dimension selon la seconde direction. Comme il est d'usage dans le domaine des lasers, la largeur w de la ligne correspond à la distance (selon cette seconde direction) entre l'axe du faisceau (où l'intensité du rayonnement est maximale) et le point où l'intensité du rayonnement est égale à 1/e² fois l'intensité maximale. Si l'axe longitudinal de la ligne laser est nommé x, on peut définir une distribution de largeurs selon cet axe, nommée w(x).

La largeur moyenne de la ou chaque ligne laser est de préférence d'au moins 35 micromètres, notamment comprise dans un domaine allant de 40 à 100 micromètres ou de 40 à 70 micromètres. Dans l'ensemble du présent texte on entend par « moyenne » la moyenne arithmétique. Sur toute la longueur de la ligne, la distribution de largeurs est étroite afin d'éviter toute hétérogénéité de traitement. Ainsi, la différence entre la largeur la plus grande et la largeur la plus petite vaut de préférence au plus 10% de la valeur de la largeur moyenne. Ce chiffre est de préférence d'au plus 5% et même 3%.

Les optiques de mise en forme et de redirection, notamment les moyens de positionnement, peuvent être ajustées manuellement ou à l'aide d'actuateurs permettant de régler leur positionnement à distance. Ces actuateurs (typiquement des moteurs ou des cales piézoélectriques) peuvent être commandés manuellement et/ou être réglés automatiquement. Dans ce dernier cas, les actuateurs seront de préférence connectés à des détecteurs ainsi qu'à une boucle de rétroaction.

Au moins une partie des modules laser, voire leur totalité est de préférence disposée en boîte étanche, avantageusement refroidie, notamment ventilée, afin d'assurer leur stabilité thermique.

Les modules laser sont de préférence montés sur une structure rigide, appelée « pont », à base d'éléments métalliques, typiquement en aluminium. La structure ne comprend de préférence pas de plaque de marbre. Le pont est de préférence positionné de manière parallèle aux moyens de convoyage de sorte que le plan focal de la ou chaque ligne laser reste parallèle à la surface du substrat à traiter. De préférence, le pont comprend au moins quatre pieds, dont la hauteur peut être individuellement ajustée pour assurer un positionnement parallèle en toutes circonstances. L'ajustement peut être assuré par des moteurs situés au niveau de chaque pied, soit manuellement, soit automatiquement, en relation avec un capteur de distance. La hauteur du pont peut être adaptée (manuellement ou automatiquement) pour prendre en compte l'épaisseur du substrat à traiter, et s'assurer ainsi que le plan du substrat coïncide avec le plan focal de la ou chaque ligne laser.

La puissance linéique de la ligne laser est de préférence d'au moins 300 W/cm, avantageusement 350 ou 400 W/cm, notamment 450 W/cm, voire 500 W/cm et même 550 W/cm. Elle est même avantageusement d'au moins 600 W/cm, notamment 800 W/cm, voire 1000 W/cm. La puissance linéique est mesurée à l'endroit où la ou chaque ligne laser est focalisée sur le revêtement. Elle peut être mesurée en disposant un détecteur de puissance le long de la ligne, par exemple un puissance-mètre calorimétrique, tel que notamment le puissance-mètre Beam Finder S/N 2000716 de la société Coherent Inc. La puissance est avantageusement répartie de manière homogène sur toute la longueur de la ou chaque ligne. De préférence, la différence entre la puissance la plus élevée et la puissance la plus faible vaut moins de 10% de la puissance moyenne.

La densité d'énergie fournie au revêtement est de préférence d'au moins 20 J/cm², voire 30 J/cm².

Le rayonnement laser est en partie réfléchi par le revêtement à traiter et en partie transmis au travers du substrat. Pour des raisons de sécurité, il est préférable de disposer sur le chemin de ces rayonnements réfléchis et/ou transmis des moyens d'arrêt du rayonnement. Il s'agira typiquement de boitiers métalliques refroidis par circulation de fluide, notamment d'eau. Pour éviter que le rayonnement réfléchi n'endommage les modules laser, l'axe de propagation de la ou chaque ligne laser forme un angle préférentiellement non-nul avec la normale au substrat, typiquement un angle compris entre 5 et 20°.

Afin de renforcer l'efficacité du traitement, il est préférable qu'au moins une partie du rayonnement laser (principal) transmise au travers du substrat et/ou réfléchie par le revêtement soit redirigée en direction dudit substrat pour former au moins un rayonnement laser secondaire, qui de préférence impacte le substrat au même endroit que le rayonnement laser principal, avec avantageusement la même profondeur de foyer et le même profil. La formation du ou de chaque rayonnement laser secondaire met avantageusement en œuvre un montage optique ne comprenant que des éléments optiques choisis parmi les miroirs, les prismes et les lentilles, notamment un montage optique constitué de deux miroirs et d'une lentille, ou d'un prisme et d'une lentille. En récupérant au moins une partie du rayonnement principal perdu et en le redirigeant vers le substrat, le traitement thermique s'en trouve considérablement amélioré. Le choix d'utiliser la partie du rayonnement principal transmise au travers du substrat (mode « transmission ») ou la partie du rayonnement principal réfléchie par le revêtement (mode « réflexion »), ou éventuellement d'utiliser les deux, dépend de la nature de la couche et de la longueur d'onde du rayonnement laser.

Lorsque le substrat est en déplacement, notamment en translation, il peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement. Le moyen de convoyage comprend de préférence un châssis rigide et une pluralité de rouleaux. Le pas des rouleaux est avantageusement compris dans un domaine allant de 50 à 300 mm. Les rouleaux comprennent de préférence des bagues métalliques, typiquement en acier, recouvertes de bandages en matière plastique. Les rouleaux sont de préférence montés sur des paliers à jeu réduit, typiquement à raison de trois rouleaux par palier. Afin d'assurer une parfaite planéité du plan de convoyage, le positionnement de chacun des rouleaux est avantageusement réglable. Les rouleaux sont de préférence mus à l'aide de pignons ou de chaînes, de préférence de chaînes tangentielles, entraînés par au moins un moteur.

La vitesse du mouvement de déplacement relatif entre le substrat et la ou chaque ligne laser est avantageusement d'au moins 4 m/min, notamment 5 m/min et même 6 m/min ou 7 m/min, ou encore 8 m/min et même 9 m/min ou 10 m/min. Selon certains modes de réalisation, en particulier lorsque l'absorption du revêtement à la longueur du laser est élevée ou lorsque le revêtement peut être déposé avec de grandes vitesses de dépôt, la vitesse du mouvement de déplacement relatif entre le substrat et la ou chaque ligne laser est d'au moins 12 m/min ou 15 m/min, notamment 20 m/min et même 25 ou 30 m/min. Afin d'assurer un traitement qui soit le plus homogène possible, la vitesse du mouvement de déplacement relatif entre le substrat et la ou chaque ligne laser varie lors du traitement d'au plus 10% en relatif, notamment 2% et même 1% par rapport à sa valeur nominale.

Le dispositif de traitement thermique selon l'invention peut être intégré dans une ligne de dépôt de couches, par exemple une ligne de dépôt par pulvérisation cathodique assistée par champ magnétique (procédé magnétron), ou une ligne de dépôt chimique en phase vapeur (CVD), notamment assistée par plasma (PECVD), sous vide ou sous pression atmosphérique (APPECVD). La ligne comprend en général des dispositifs de manutention des substrats, une installation de dépôt, des dispositifs de contrôle optique, des dispositifs d'empilage. Les substrats défilent, par exemple sur des rouleaux convoyeurs, successivement devant chaque dispositif ou chaque installation.

Le dispositif de traitement thermique selon l'invention est de préférence situé juste après l'installation de dépôt du revêtement, par exemple à la sortie de l'installation de dépôt. Le substrat revêtu peut ainsi être traité en ligne après le dépôt du revêtement, à la sortie de l'installation de dépôt et avant les dispositifs de contrôle optique, ou après les dispositifs de contrôle optique et avant les dispositifs d'empilage des substrats.

Le dispositif de traitement thermique peut aussi être intégré à l'installation de dépôt. Par exemple, le laser peut être introduit dans une des chambres d'une installation de dépôt par pulvérisation cathodique, notamment dans une chambre où l'atmosphère est raréfiée, notamment sous une pression comprise entre 10⁻⁶ mbar et 10⁻² mbar. Le dispositif de traitement thermique peut aussi être disposé en dehors de l'installation de dépôt, mais de manière à traiter un substrat situé à l'intérieur de ladite installation. Il suffit de prévoir à cet effet un hublot transparent à la longueur d'onde du rayonnement utilisé, au travers duquel le rayonnement laser viendrait traiter la couche. Il est ainsi possible de traiter une couche (par exemple une couche d'argent) avant le dépôt subséquent d'une autre couche dans la même installation.

Que le dispositif de traitement thermique soit en dehors de ou intégré à l'installation de dépôt, ces procédés « en ligne » sont préférables à un procédé en reprise dans lequel il serait nécessaire d'empiler les substrats de verre entre l'étape de dépôt et le traitement thermique.

Les procédés en reprise peuvent toutefois avoir un intérêt dans les cas où la mise en œuvre du traitement thermique selon l'invention est faite dans un lieu différent de celui où est réalisé le dépôt, par exemple dans un lieu où est réalisée la transformation du verre. Le dispositif de traitement thermique peut donc être intégré à d'autres lignes que la ligne de dépôt de couches. Il peut par exemple être intégré à une ligne de fabrication de vitrages multiples (doubles ou triples vitrages notamment), à une ligne de fabrication de vitrages feuilletés, ou encore à une ligne de fabrication de vitrages bombés et/ou trempés. Les vitrages feuilletés ou bombés ou trempés peuvent être utilisés aussi bien en tant que vitrages bâtiment ou automobile. Dans ces différents cas, le traitement thermique selon l'invention est de préférence réalisé avant la réalisation du vitrage multiple ou feuilleté. Le traitement thermique peut toutefois être mis en œuvre après réalisation du double vitrage ou du vitrage feuilleté.

Le dispositif de traitement thermique est de préférence disposé dans une enceinte close permettant de sécuriser les personnes en évitant tout contact avec le rayonnement laser et d'éviter toute pollution, notamment du substrat, des optiques ou de la zone de traitement.

Le dépôt de l'empilement sur le substrat peut être réalisé par tout type de procédé, en particulier des procédés générant des couches majoritairement amorphes ou nano-cristallisées, tels que le procédé de pulvérisation cathodique, notamment assisté par champ magnétique (procédé magnétron), le procédé de dépôt chimique en phase vapeur assisté par plasma (PECVD), le procédé d'évaporation sous vide, ou le procédé sol-gel.

L'empilement est de préférence déposé par pulvérisation cathodique, notamment assistée par champ magnétique (procédé magnétron).

Pour plus de simplicité, le traitement thermique de l'empilement se fait de préférence sous air et/ou à pression atmosphérique. Il est toutefois possible de procéder au traitement thermique de l'empilement au sein même de l'enceinte de dépôt sous vide, par exemple avant un dépôt subséquent.

Le substrat est de préférence en verre ou en vitrocéramique. Il est de préférence transparent, incolore (il s'agit alors d'un verre clair ou extra-clair) ou coloré, par exemple en bleu, gris, vert ou bronze. Le verre est de préférence de type silico-sodo-calcique, mais il peut également être en verre de type borosilicate ou alumino-borosilicate. Le substrat présente avantageusement au moins une dimension supérieure ou égale à 1 m, voire 2 m et même 3 m. L'épaisseur du substrat varie généralement entre 0,1 mm et 19 mm, de préférence entre 0,7 et 9 mm, notamment entre 1 et 6 mm, voire entre 2 et 4 mm. La déformation du substrat étant d'autant plus importante que son épaisseur est faible, le procédé selon l'invention est particulièrement bien adapté à des substrats de verre dont l'épaisseur est comprise dans un domaine allant de 0,1 à 4 mm, notamment de 0,5 à 3 mm.

Le substrat de verre est de préférence du type flotté, c'est-à-dire susceptible d'avoir été obtenu par un procédé consistant à déverser le verre fondu sur un bain d'étain en fusion (bain « float »). Dans ce cas, le revêtement à traiter peut aussi bien être déposé sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre. Le substrat de verre peut également être obtenu par laminage entre deux rouleaux, technique permettant en particulier d'imprimer des motifs à la surface du verre.

De préférence, le substrat ne porte pas de revêtement sur la deuxième face.

Le traitement thermique est de préférence destiné à améliorer la cristallisation du revêtement, notamment par une augmentation de la taille des cristaux et/ou de la quantité de phase cristalline. Le traitement thermique peut également être destiné à oxyder une couche d'un métal ou d'un oxyde métallique sous-stœchiométrique en oxygène, éventuellement en favorisant la croissance d'une phase cristalline particulière.

De préférence, l'étape de traitement thermique ne met pas en œuvre de fusion, même partielle, du revêtement. Dans les cas où le traitement est destiné à améliorer la cristallisation du revêtement, le traitement thermique permet d'apporter une énergie suffisante pour favoriser la cristallisation du revêtement par un mécanisme physico-chimique de croissance cristalline autour de germes déjà présents dans le revêtement, en restant en phase solide. Ce traitement ne met pas en œuvre de mécanisme de cristallisation par refroidissement à partir d'un matériau fondu, d'une part car cela nécessiterait des températures extrêmement élevées, et d'autre part car cela serait susceptible de modifier les épaisseurs ou les indices de réfraction du revêtement, et donc ses propriétés, en modifiant par exemple son aspect optique.

Le traitement thermique selon l'invention est particulièrement bien adapté au traitement de revêtements faiblement absorbants à la longueur d'onde du laser. L'absorption du revêtement à la longueur d'onde du laser est de préférence d'au moins 5%, notamment 10%. Elle est avantageusement d'au plus 90%, notamment 80% ou 70%, voire 60% ou 50%, et même 40% ou encore 30%.

Le revêtement traité comprend de préférence une couche mince choisie parmi les couches métalliques (notamment à base ou constituées d'argent ou de molybdène), les couches d'oxyde de titane et les couches transparentes électroconductrices.

Les couches transparentes électroconductrices sont typiquement à base d'oxydes mixtes d'étain et d'indium (appelées « ITO »), à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé au fluor et/ou à l'antimoine. Ces différentes couches ont la particularité d'être des couches transparentes et néanmoins conductrices ou semiconductrices, et sont employées dans de nombreux systèmes où ces deux propriétés sont nécessaires : écrans à cristaux liquides (LCD), capteurs solaires ou photovoltaïques, dispositifs électrochromes ou électroluminescents (notamment LED, OLED)... Leur épaisseur, généralement pilotée par la résistance carrée désirée, est typiquement comprise entre 50 et 1000 nm, bornes comprises.

Les couches minces métalliques, par exemple à base d'argent métallique, mais aussi à base de molybdène ou de niobium métalliques, ont des propriétés de conduction électrique et de réflexion des rayonnements infrarouges, d'où leur utilisation dans des vitrages à contrôle solaire, notamment anti-solaires (visant à diminuer la quantité d'énergie solaire entrante) ou à faible émissivité (visant à diminuer la quantité d'énergie dissipée vers l'extérieur d'un bâtiment ou d'un véhicule). Leur épaisseur physique est typiquement comprise entre 4 et 20 nm (bornes comprises). Les empilements bas émissifs peuvent fréquemment comprendre plusieurs couches d'argent, typiquement 2 ou 3. La ou chaque couche d'argent est généralement entourée de couches diélectriques la protégeant de la corrosion et permettant d'ajuster l'aspect en réflexion du revêtement. Le molybdène est fréquemment employé comme matériau d'électrodes pour les cellules photovoltaïques à base de CuInₓGa₁₋ₓSe₂, où x varie de 0 à 1. Le traitement selon l'invention permet de réduire sa résistivité. D'autres métaux peuvent être traités selon l'invention, comme par exemple le titane, dans le but notamment de l'oxyder et d'obtenir une couche d'oxyde de titane photocatalytique.

Lorsque le revêtement à traiter est un empilement bas-émissif, il comprend de préférence, à partir du substrat, un premier revêtement comprenant au moins une première couche diélectrique, au moins une couche d'argent, éventuellement une couche de sur-bloqueur et un deuxième revêtement comprenant au moins une deuxième couche diélectrique.

De préférence, l'épaisseur physique de la ou de chaque couche d'argent est comprise entre 6 et 20 nm.

La couche de sur-bloqueur est destinée à protéger la couche d'argent pendant le dépôt d'une couche ultérieure (par exemple si cette dernière est déposée sous atmosphère oxydante ou nitrurante) et pendant un éventuel traitement thermique du type trempe ou bombage.

La couche d'argent peut également être déposée sur et en contact avec une couche de sous-bloqueur. L'empilement peut donc comprendre une couche de sur-bloqueur et/ou une couche de sous-bloqueur encadrant la ou chaque couche d'argent.

Les couches de bloqueur (sous-bloqueur et/ou sur-bloqueur) sont généralement à base d'un métal choisi parmi le nickel, le chrome, le titane, le niobium, ou d'un alliage de ces différents métaux. On peut notamment citer les alliages nickel-titane (notamment ceux comprenant environ 50% en poids de chaque métal) ou les alliages nickel-chrome (notamment ceux comprenant 80% en poids de nickel et 20% en poids de chrome). La couche de sur-bloqueur peut encore être constituée de plusieurs couches superposées, par exemple, en s'éloignant du substrat, de titane puis d'un alliage de nickel (notamment un alliage nickel-chrome) ou l'inverse. Les différents métaux ou alliages cités peuvent également être partiellement oxydés, notamment présenter une sous-stœchiométrie en oxygène (par exemple TiOₓ ou NiCrOₓ).

Ces couches de bloqueur (sous-bloqueur et/ou sur-bloqueur) sont très fines, normalement d'une épaisseur inférieure à 1 nm, pour ne pas affecter la transmission lumineuse de l'empilement, et sont susceptibles d'être partiellement oxydées pendant le traitement thermique selon l'invention. D'une manière générale les couches de bloqueur sont des couches sacrificielles, susceptibles de capter l'oxygène provenant de l'atmosphère ou du substrat, évitant ainsi l'oxydation de la couche d'argent.

La première et/ou la deuxième couche diélectrique est typiquement en oxyde (notamment en oxyde d'étain), ou de préférence en nitrure, notamment en nitrure de silicium (en particulier pour la deuxième couche diélectrique, la plus éloignée du substrat). D'une manière générale, le nitrure de silicium peut être dopé, par exemple avec de l'aluminium ou du bore, afin de faciliter son dépôt par les techniques de pulvérisation cathodique. Le taux de dopage (correspondant au pourcentage atomique par rapport à la quantité de silicium) ne dépasse généralement pas 2%. Ces couches diélectriques ont pour fonction de protéger la couche d'argent des agressions chimiques ou mécaniques et influent également sur les propriétés optiques, notamment en réflexion, de l'empilement, grâce à des phénomènes interférentiels.

Le premier revêtement peut comprendre une couche diélectrique, ou plusieurs couches diélectriques, typiquement 2 à 4. Le deuxième revêtement peut comprendre une couche diélectrique, ou plusieurs couches diélectriques, typiquement 2 à 3. Ces couches diélectriques sont de préférence en un matériau choisi parmi le nitrure de silicium, les oxydes de titane, d'étain ou de zinc, ou l'un quelconque de leurs mélanges ou solutions solides, par exemple un oxyde d'étain et de zinc, ou un oxyde de titane et de zinc. Que ce soit dans le premier revêtement ou dans le deuxième revêtement, l'épaisseur physique de la couche diélectrique, ou l'épaisseur physique globale de l'ensemble des couches diélectriques, est de préférence comprise entre 15 et 60 nm, notamment entre 20 et 50 nm.

Le premier revêtement comprend de préférence, immédiatement sous la couche d'argent ou sous l'éventuelle couche de sous-bloqueur, une couche de mouillage dont la fonction est d'augmenter le mouillage et l'accrochage de la couche d'argent. L'oxyde de zinc, notamment dopé à l'aluminium, s'est révélé particulièrement avantageux à cet égard.

Le premier revêtement peut également contenir, directement sous la couche de mouillage, une couche de lissage, qui est un oxyde mixte partiellement voire totalement amorphe (donc de très faible rugosité), dont la fonction est de favoriser la croissance de la couche de mouillage selon une orientation cristallographique préférentielle, laquelle favorise la cristallisation de l'argent par des phénomènes d'épitaxie. La couche de lissage est de préférence composée d'un oxyde mixte d'au moins deux métaux choisis parmi Sn, Zn, In, Ga, Sb. Un oxyde préféré est l'oxyde d'étain et d'indium dopé à l'antimoine.

Dans le premier revêtement, la couche de mouillage ou l'éventuelle couche de lissage est de préférence déposée directement sur la première couche diélectrique. La première couche diélectrique est de préférence déposée directement sur le substrat. Pour adapter au mieux les propriétés optiques de l'empilement (notamment l'aspect en réflexion), la première couche diélectrique peut alternativement être déposée sur une autre couche en oxyde ou en nitrure, par exemple en oxyde de titane.

Au sein du deuxième revêtement, la deuxième couche diélectrique peut être déposée directement sur la couche d'argent, ou de préférence sur un sur-bloqueur, ou encore sur d'autres couches en oxyde ou en nitrure, destinées à adapter les propriétés optiques de l'empilement. Par exemple, une couche d'oxyde de zinc, notamment dopé à l'aluminium, ou encore une couche d'oxyde d'étain, peut être disposée entre un sur-bloqueur et la deuxième couche diélectrique, qui est de préférence en nitrure de silicium. L'oxyde de zinc, notamment dopé à l'aluminium, permet d'améliorer l'adhésion entre l'argent et les couches supérieures.

Ainsi, l'empilement traité selon l'invention comprend de préférence au moins une succession ZnO / Ag / ZnO. L'oxyde de zinc peut être dopé à l'aluminium. Une couche de sous-bloqueur peut être disposée entre la couche d'argent et la couche sous-jacente. Alternativement ou cumulativement, une couche de sur-bloqueur peut être disposée entre la couche d'argent et la couche sus-jacente.

Enfin, le deuxième revêtement peut être surmonté d'une surcouche, parfois appelée « overcoat » dans la technique. Dernière couche de l'empilement, donc en contact avec l'air ambiant, elle est destinée à protéger l'empilement contre toutes agressions mécaniques (rayures...) ou chimiques. Cette surcouche est généralement très fine pour ne pas perturber l'aspect en réflexion de l'empilement (son épaisseur est typiquement comprise entre 1 et 5 nm). Elle est de préférence à base d'oxyde de titane ou d'oxyde mixte d'étain et de zinc, notamment dopé à l'antimoine, déposé sous forme sous-stœchiométrique.

L'empilement peut comprendre une ou plusieurs couches d'argent, notamment deux ou trois couches d'argent. Lorsque plusieurs couches d'argent sont présentes, l'architecture générale présentée ci-avant peut être répétée. Dans ce cas, le deuxième revêtement relatif à une couche d'argent donnée (donc situé au-dessus de cette couche d'argent) coïncide généralement avec le premier revêtement relatif à la couche d'argent suivante.

Les couches minces à base d'oxyde de titane ont la particularité d'être autonettoyantes, en facilitant la dégradation des composés organiques sous l'action de rayonnements ultraviolets et l'élimination des salissures minérales (poussières) sous l'action d'un ruissellement d'eau. Leur épaisseur physique est de préférence comprise entre 2 et 50 nm, notamment entre 5 et 20 nm, bornes comprises.

Les différentes couches citées présentent la particularité commune de voir certaines de leurs propriétés améliorées lorsqu'elles sont dans un état au moins partiellement cristallisé. On cherche généralement à augmenter au maximum le taux de cristallisation de ces couches (la proportion massique ou volumique de matière cristallisée) et la taille des grains cristallins (ou la taille de domaines cohérents de diffraction mesurés par des méthodes de diffraction des rayons X), voire dans certains cas à favoriser une forme cristallographique particulière.

Dans le cas de l'oxyde de titane, il est connu que l'oxyde de titane cristallisé sous la forme anatase est bien plus efficace en terme de dégradation des composés organiques que l'oxyde de titane amorphe ou cristallisé sous la forme rutile ou brookite.

Il est également connu que les couches d'argent présentant un taux de cristallisation élevé et par conséquent une faible teneur résiduelle en argent amorphe présentent une émissivité et une résistivité plus basses que des couches d'argent majoritairement amorphes. La conductivité électrique et les propriétés de faible émissivité de ces couches sont ainsi améliorées.

De même, les couches transparentes conductrices précitées, notamment celles à base d'oxyde de zinc dopé, d'oxyde d'étain dopé au fluor ou d'oxyde d'indium dopé à l'étain présentent une conductivité électrique d'autant plus forte que leur taux de cristallisation est élevé.

De préférence, lorsque le revêtement est conducteur, sa résistance carrée est diminuée d'au moins 10%, voire 15% ou même 20% par le traitement thermique. Il s'agit ici d'une diminution relative, par rapport à la valeur de la résistance carrée avant traitement.

D'autres revêtements peuvent être traités selon l'invention. On peut notamment citer, de manière non limitative, les revêtements à base de (ou constitués de) CdTe ou de chalcopyrites, par exemple du type CuInₓGa₁₋ₓSe₂, où x varie de 0 à 1. On peut également citer les revêtements de type émail (par exemple déposé par sérigraphie), peinture ou laque (typiquement comprenant une résine organique et des pigments).

Les substrats revêtus obtenus selon l'invention peuvent être utilisés dans des vitrages simples, multiples ou feuilletés, des miroirs, des revêtements muraux en verre. Si le revêtement est un empilement bas émissif, et dans le cas d'un vitrage multiple comportant au moins deux feuilles de verre séparées par une lame de gaz, il est préférable que l'empilement soit disposé sur la face en contact avec ladite lame de gaz, notamment en face 2 par rapport à l'extérieur (c'est-à-dire sur la face du substrat en contact avec l'extérieur du bâtiment qui est en opposée à la face tournée vers l'extérieur) ou en face 3 (c'est-à-dire sur la face du deuxième substrat en partant de l'extérieur du bâtiment tournée vers l'extérieur). Si le revêtement est une couche photocatalytique, il est de préférence disposé en face 1, donc en contact avec l'extérieur du bâtiment.

Les substrats revêtus obtenus selon l'invention peuvent aussi être utilisés dans des cellules ou vitrages photovoltaïques ou des panneaux solaires, le revêtement traité selon l'invention étant par exemple une électrode à base de ZnO : Al ou Ga dans des empilements à base de chalcopyrites (notamment du type CIGS - CuInₓGa₁₋ₓSe₂, x variant de 0 à 1) ou à base de silicium amorphe et/ou polycristallin, ou encore à base de CdTe.

Les substrats revêtus obtenus selon l'invention peuvent encore être utilisés dans des écrans de visualisation du type LCD (Liquid Crystal Display), OLED (Organic Light Emitting Diodes) ou FED (Field Emission Display), le revêtement traité selon l'invention étant par exemple une couche électroconductrice en ITO. Ils peuvent encore être utilisés dans des vitrages électrochromes, la couche mince traitée selon l'invention étant par exemple une couche électroconductrice transparente tel qu'enseignée dans la demande FR-A-2 833 107.

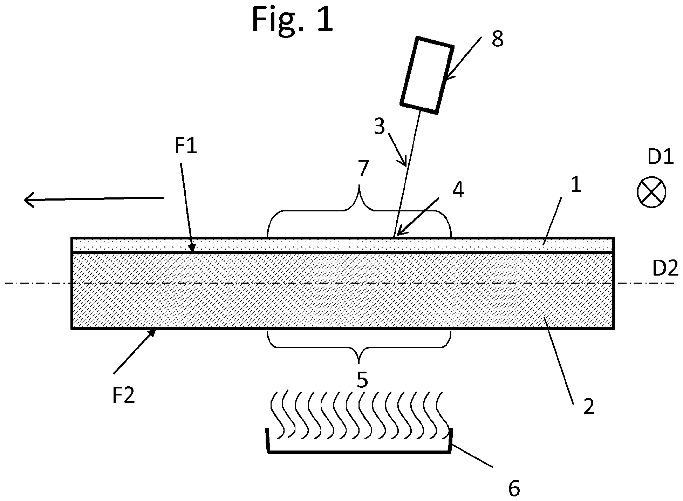

L'invention est illustrée à l'aide de la Figure 1 et des exemples de réalisation non limitatifs qui suivent.

La Figure 1 est une vue schématique en coupe longitudinale d'un mode de réalisation de l'invention.

Le substrat 2 (typiquement en verre ou en vitrocéramique) et le revêtement 1 déposé sur la première face F1 sont représentés en coupe de manière très agrandie par rapport au reste de la Figure 1, puisqu'en général l'épaisseur du substrat 2 (quelques millimètres) et du revêtement 1 (quelques dizaines ou centaines de nanomètres) sont très faibles au regard de la longueur de la zone de chauffage additionnel 5.

Le substrat 2 muni de son revêtement 1 sur la première face F1 est amené à défiler sous une source laser 8 grâce à des moyens de déplacement non représentés, dans une seconde direction D2 matérialisée en traits pointillés, et selon un sens matérialisé par la flèche. Le substrat 2 possède deux faces (principales) opposées F1 et F2, respectivement première et deuxième face.

La source laser 8 émet un rayonnement laser 3 focalisé sur le revêtement 1 sous la forme d'une ligne laser 4 s'étendant selon une première direction D1 perpendiculaire à la direction D2. La longueur de la ligne laser (dans la direction D1) est égale à la largeur du substrat (dans cette même direction) et la largeur moyenne de la ligne laser est comprise dans un domaine allant de 40 à 100 micromètres.

Compte tenu du sens de déplacement, la zone située en aval de la ligne laser 4 correspond sur la figure à la zone située à gauche de la normale à la face F1 passant par la ligne laser 4. Cette zone correspond aux parties du revêtement 1 déjà traitées par la ligne laser 4. Les parties situées à droite de cette normale n'ont pas encore été traitées.

Des moyens de chauffage additionnel 6 (par exemple des lampes infrarouge) sont disposés du côté opposé à la ligne laser, et permettent de chauffer la deuxième face F2 dans une zone 5 (zone de chauffage additionnel) s'étendant en regard de la ligne laser 4 dans les deux directions D1 et D2, avec une longueur dans la direction D2 d'au moins 10 cm, par exemple 30 ou 40 cm.

La zone de chauffage additionnel 5 est ici telle que le rapport entre sa surface s'étendant en aval de la ligne laser et sa surface s'étendant en amont de la ligne laser est d'environ 65 :35. C'est en effet dans la zone située en aval de la ligne laser que le substrat est le plus à même de se déformer.

On peut mesurer dans la zone 7, de même surface que la zone de chauffage additionnel 5 et exactement opposée à cette dernière, une température moyenne T₁. De même, il est possible de mesurer une température moyenne T₂ dans la zone de chauffage additionnel 5. De préférence, la différence de température ΔT = T₂-T₁ est d'au moins 8°C, par exemple 10°C.

### Exemples

On dépose par pulvérisation cathodique magnétron sur un substrat de verre clair dont la surface est de 600×321 cm² et l'épaisseur de 4 mm un empilement bas-émissif contenant une couche d'argent.

Le tableau 1 ci-après indique l'épaisseur physique de chacune des couches de l'empilement, exprimée en nm. La première ligne correspond à la couche la plus éloignée du substrat, en contact avec l'air libre.

**Tableau 1**

| | |
|---|---|
| ZnSnSbOₓ | 2 |
| Si₃N₄ :Al | 43 |
| ZnO :Al | 5 |
| Ti | 0,5 |
| Ag | 15 |
| ZnO :Al | 5 |
| TiO₂ | 11 |
| Si₃N₄ :Al | 14 |

Le tableau 2 ci-après récapitule les paramètres du dépôt employés pour les différentes couches.

**Tableau 2**

| Couche | Cible employée | Pression de dépôt | Gaz |
|---|---|---|---|
| Si₃N₄ | Si:Al à 92:8 % wt | 1,5.10⁻³ mbar | Ar /(Ar + N₂) à 45 % |
| TiO₂ | TiOₓ avec x de l'ordre de 1,9 | 1,5.10⁻³ mbar | Ar /(Ar + O₂) à 95 % |
| ZnSnSbOₓ | SnZn:Sb à 34:65:1 wt | 2.10⁻³ mbar | Ar /(Ar + O₂) à 58 % |
| ZnO :Al | Zn:Al à 98:2 % wt | 2.10⁻³ mbar | Ar /(Ar + O₂) à 52 % |
| Ti | Ti | 2.10⁻³ mbar | Ar |
| Ag | Ag | 2.10⁻³ mbar | Ar à 100 % |

A la sortie de la machine de dépôt magnétron, le substrat muni de son empilement est convoyé horizontalement à une vitesse d'environ 10 m/minute et passe sous une ligne laser disposée perpendiculairement à la direction de déplacement. La ligne est obtenue à partir de diodes laser émettant un rayonnement continu dont la longueur d'onde est de 915 nm ou 980 nm focalisé sur le revêtement. La puissance linéique de la ligne laser est de 400 W/cm, et sa largeur moyenne de 53 micromètres. La ligne s'étend sur une longueur égale à la largeur du substrat.

Dans ces conditions, on peut observer une déformation dans l'axe vertical d'environ 1,2 mm, et donc un déplacement du substrat en dehors du plan focal de la ligne laser, préjudiciable au traitement.

La température moyenne T₁ mesurée sur la première face dans une zone d'environ 40 cm de long (selon la direction de déplacement) autour de la ligne laser est d'environ 30°C. Compte tenu de la vitesse de convoyage et de la largeur de la ligne laser, le traitement thermique ne dure qu'environ 1 ms (au sens où chaque point du revêtement n'est chauffé que pendant cette courte durée). La chaleur n'a donc pas le temps de diffuser latéralement, si bien que les zones situées autour du laser, même à faible distance, sont à quasiment à la température ambiante.

Dans un deuxième essai on a disposé en regard de la deuxième face du substrat des lampes infrarouge de manière à chauffer une zone d'environ 40 cm de long (dans la direction de déplacement), et d'environ 320 cm de large (la largeur du substrat). Environ 65% de la surface de la zone de chauffage additionnel était située en aval de la ligne laser. La température moyenne (T₂) atteinte en deuxième face dans la zone de chauffage additionnel était de 40°C, mesurée par une caméra infrarouge CEDIP JADE dotée d'un détecteur InSb.

Grâce au chauffage additionnel, la déformation n'était plus que de 0,2 mm.

Le chauffage additionnel modéré portant sur une zone de surface bien plus importante que la surface de la ligne laser a donc permis de réduire très significativement la déformation du substrat.

## Revendications

1. Procédé de traitement thermique d'un revêtement (1) déposé sur au moins une partie d'une première face (F1) d'un substrat (2) comprenant une première face (F1)et une deuxième face (F2) opposée à ladite première face (F1), dans lequel on traite ledit revêtement (1) au moyen d'un rayonnement laser (3) focalisé sur ledit revêtement (1) sous la forme d'une ligne laser (4) s'étendant selon une première direction (D1), ledit traitement thermique étant tel que l'on crée dans une seconde direction (D2) transverse à ladite première direction (D1)un mouvement de déplacement relatif entre ledit substrat (2) et ladite ligne laser (4), ledit procédé étant **caractérisé en ce que** l'on chauffe localement ladite deuxième face (F2) à une température d'au moins 30°C dans une zone de chauffage additionnel (5) s'étendant en regard de ladite ligne laser (4) sur une longueur d'au moins 10 cm selon ladite seconde direction (D2), à l'aide d'au moins un moyen de chauffage additionnel (6) disposé du côté opposé à ladite ligne laser (4) par rapport audit substrat (2), la largeur moyenne de la ligne laser (4) est comprise dans un domaine allant de 40 à 100 micromètres.

2. Procédé selon la revendication 1, tel que le substrat (2) est en verre ou en vitrocéramique.

3. Procédé selon l'une des revendications précédentes, tel que le substrat (2) ne porte pas de revêtement sur la deuxième face (F2).

4. Procédé selon l'une des revendications précédentes, tel que l'on chauffe localement la deuxième face (F2) sur une zone de chauffage additionnel (5) s'étendant en regard de la ligne laser (4) sur une longueur d'au moins 20, notamment 30 cm selon la seconde direction (D2).

5. Procédé selon l'une des revendications précédentes, tel que l'on chauffe localement la deuxième face (F2) à une température d'au moins 40°C, notamment 50°C, dans la zone de chauffage additionnel (5).

6. Procédé selon l'une des revendications précédentes, tel que la différence relative ΔT (T₂ - T₁) entre la température moyenne T₂ de la deuxième face (F2) du substrat dans la zone de chauffage additionnel (5) et la température moyenne T₁ du revêtement (1) dans la zone (7) de même surface que ladite zone de chauffage additionnel (5) et exactement opposée à ladite zone de chauffage additionnel (5) est d'au moins 0, notamment +5°C.

7. Procédé selon l'une des revendications précédentes, tel que la longueur de la ligne laser (4) est d'au moins 0,8 m, notamment 1 m.

8. Procédé selon l'une des revendications précédentes, tel que le ou chaque moyen de chauffage additionnel (6) est choisi parmi les moyens de chauffage par rayonnement, les moyens de chauffage par convection, les moyens de chauffage par conduction ou l'une quelconque de leurs combinaisons.

9. Procédé selon la revendication précédente, tel que le ou chaque moyen de chauffage additionnel (6) est un moyen de chauffage par convection, notamment des buses envoyant un gaz chaud.

10. Procédé selon la revendication 8, tel que le ou chaque moyen de chauffage additionnel (6) est une lampe infrarouge.

11. Procédé selon l'une des revendications précédentes, tel que le revêtement (1) comprend au moins une couche mince choisie parmi les couches métalliques, notamment à base d'argent ou de molybdène, les couches d'oxyde de titane et les couches transparentes électroconductrices.

12. Procédé selon l'une des revendications précédentes, tel que la température maximale subie par chaque point du revêtement (1) lors du traitement thermique est d'au moins 300°C, notamment 400°C.

13. Procédé d'obtention d'un substrat (2) muni d'un revêtement (1) sur au moins une partie d'une première face (F1) comprenant une étape de dépôt dudit revêtement (1) sur ladite première face (F1) puis une étape de traitement thermique dudit revêtement (1) selon le procédé de l'une des revendications 1 à 13.

14. Dispositif de mise en œuvre du procédé selon l'une des revendications 1 à 13 comprenant au moins une source laser (8), des moyens de mise en forme et de redirection capables de générer un rayonnement laser (3) focalisé sur un revêtement (1), déposé sur une première face (F1) d'un substrat (2), sous la forme d'une ligne laser (4) s'étendant selon une première direction (D1), des moyens de déplacement aptes à créer en fonctionnement un mouvement de déplacement relatif entre ledit substrat (2) et ladite ligne laser (1), et des moyens de chauffage additionnel (6) disposés du côté opposé à ladite ligne laser (4) par rapport audit substrat (2) aptes à chauffer localement la deuxième face (F2) dudit substrat (2) à une température d'au moins 30°C sur une zone de chauffage additionnel (5) s'étendant en regard de ladite ligne laser (4) sur une longueur d'au moins 10 cm selon ladite seconde direction

## Patentansprüche

1. Verfahren zur Wärmebehandlung einer Beschichtung (1), die auf mindestens einem Teil einer ersten Fläche (F1) eines Substrats (2) abgeschieden ist, das eine erste Fläche (F1) und eine zweite Fläche (F2) gegenüber der ersten Fläche (F1) umfasst, wobei die Beschichtung (1) mittels einer Laserbestrahlung (3) behandelt wird, die auf die Beschichtung (1) in Form einer Laserlinie (4) fokussiert wird, die sich gemäß einer erste Richtung (D1) erstreckt, wobei die Wärmebehandlung derart ist, dass in einer zweiten Richtung (D2) quer zu der ersten Richtung (D1) eine relative Verschiebungsbewegung zwischen dem Substrat (2) und der Laserlinie (4) erzeugt wird, wobei das Verfahren **dadurch gekennzeichnet ist, dass** die zweite Fläche (F2) in einer zusätzlichen Erwärmungszone (5), die sich gegenüber der Laserlinie (4) über eine Länge von mindestens 10 cm gemäß der zweiten Richtung (D2) erstreckt, unter Verwendung des mindestens einen zusätzlichen Erwärmungsmittels (6), das bezüglich des Substrats (2) auf der der Laserlinie (4) gegenüberliegenden Seite angeordnet ist, lokal auf eine Temperatur von mindestens 30 °C erwärmt wird, wobei die durchschnittliche Breite der Laserlinie (4) in einem Bereich von 40 bis 100 Mikrometern liegt.

2. Verfahren nach Anspruch 1, wobei das Substrat (2) aus Glas oder Glaskeramik besteht.

3. Verfahren nach einem der vorstehenden Ansprüche, wobei das Substrat (2) auf der zweiten Fläche (F2) keine Beschichtung trägt.

4. Verfahren nach einem der vorstehenden Ansprüche, wobei die zweite Fläche (F2) in einer zusätzlichen Erwärmungszone (5), die sich gegenüber der Laserlinie (4) über eine Länge von mindestens 20, insbesondere 30 cm, gemäß der zweiten Richtung (D2) erstreckt, lokal erwärmt wird.

5. Verfahren nach einem der vorstehenden Ansprüche, wobei die zweite Fläche (F2) in der zusätzlichen Erwärmungszone (5) lokal auf eine Temperatur von mindestens 40 °C, insbesondere 50 °C, erwärmt wird.

6. Verfahren nach einem der vorstehenden Ansprüche, wobei die relative Differenz ΔT (T₂ - T₁) zwischen der mittleren Temperatur T₂ der zweiten Fläche (F2) des Substrats in der zusätzlichen Erwärmungszone (5) und der mittleren Temperatur T₁ der Beschichtung (1) in der Zone (7), der gleichen Oberfläche wie die zusätzliche Erwärmungszone (5) und der zusätzlichen Erwärmungszone (5) genau gegenüberliegend, mindestens 0, insbesondere +5 °C, beträgt.

7. Verfahren nach einem der vorstehenden Ansprüche, wobei die Länge der Laserlinie (4) mindestens 0,8 m, insbesondere 1 m, beträgt.

8. Verfahren nach einem der vorstehenden Ansprüche, wobei das oder jedes zusätzliche Erwärmungsmittel (6) ausgewählt ist aus Bestrahlungserwärmungsmitteln, Konvektionserwärmungsmitteln, Leitungserwärmungsmitteln oder einer beliebigen Kombination davon.

9. Verfahren nach dem vorstehendem Anspruch, wobei das oder jedes zusätzliche Erwärmungsmittel (6) ein Konvektionserwärmungsmittel ist, insbesondere Düsen, die ein warmes Gas aussenden.

10. Verfahren nach Anspruch 8, wobei das oder jedes zusätzliche Erwärmungsmittel (6) eine Infrarotlampe ist.

11. Verfahren nach einem der vorstehenden Ansprüche, wobei die Beschichtung (1) mindestens eine dünne Schicht umfasst, ausgewählt aus Metallschichten, insbesondere auf Basis von Silber oder Molybdän, Titanoxidschichten und transparenten elektrisch leitenden Schichten.

12. Verfahren nach einem der vorstehenden Ansprüche, wobei die maximale Temperatur, der jeder Punkt der Beschichtung (1) während der Wärmebehandlung ausgesetzt ist, mindestens 300 °C, insbesondere 400 °C, beträgt.

13. Verfahren zum Erhalten eines Substrats (2), das mit einer Beschichtung (1) auf mindestens einem Teil einer ersten Fläche (F1) versehen ist, umfassend einen Schritt der Abscheidung der Beschichtung (1) auf der ersten Fläche (F1), anschließend einen Schritt der Wärmebehandlung der Beschichtung (1) nach dem Verfahren nach einem der Ansprüche 1 bis 13.

14. Vorrichtung zum Durchführen des Verfahrens nach einem der Ansprüche 1 bis 13, umfassend mindestens eine Laserquelle (8), Mittel zum Formen und Umlenken, die in der Lage sind, eine Laserbestrahlung (3), fokussiert auf eine Beschichtung (1), die auf einer ersten Fläche (F1) eines Substrats (2) abgeschieden ist, in Form einer Laserlinie (4) zu erzeugen, die sich gemäß einer ersten Richtung (D1) erstreckt, Verschiebungsmittel, die geeignet sind, während des Betriebs eine relative Verschiebungsbewegung zwischen dem Substrat (2) und der Laserlinie (1) zu erzeugen, und zusätzliche Erwärmungsmittel (6), die bezogen auf das Substrat (2) auf der der Laserlinie (4) gegenüberliegenden Seite angeordnet sind, die geeignet sind, die zweite Fläche (F2) des Substrats (2) in einer zusätzlichen Erwärmungszone (5), die sich gegenüber der Laserlinie (4) über eine Länge von mindestens 10 cm gemäß der zweiten Richtung erstreckt, lokal auf eine Temperatur von mindestens 30 °C zu erwärmen

## Claims

1. A process for the heat treatment of a coating (1) deposited on at least one portion of a first face (F1) of a substrate (2) comprising a first face (F1) and a second face (F2) opposite said first face (F1), wherein said coating (1) is treated by means of a laser radiation (3) focused on said coating (1) in the form of a laser line (4) extending along a first direction (D1), said heat treatment being such that, in a second direction (D2) transverse to said first direction (D1), a relative displacement movement is created between said substrate (2) and said laser line (4), said process being **characterized in that** said second face (F2) is heated locally at a temperature of at least 30°C in an additional heating zone (5) extending facing said laser line (4) over a length of at least 10 cm along said second direction (D2), with the aid of at least one additional heating means (6) positioned on the side opposite said laser line (4) with respect to said substrate (2),the mean width of the laser line is within a range extending from 40 to 100 micrometers.

2. The process as claimed in claim 1, such that the substrate (2) is made of glass or of glass-ceramic.

3. The process as claimed in either of the preceding claims, such that the substrate (2) does not bear a coating on the second face (F2).

4. The process as claimed in one of the preceding claims, such that the second face (F2) is heated locally over an additional heating zone (5) extending facing the laser line (4) over a length of at least 20 cm, in particular 30 cm, along the second direction (D2).

5. The process as claimed in one of the preceding claims, such that the second face (F2) is heated locally at a temperature of at least 40°C, in particular 50°C, in the additional heating zone (5).

6. The process as claimed in one of the preceding claims, such that the relative difference ΔT (T₂ - T₁) between the mean temperature T₂ of the second face (F2) of the substrate in the additional heating zone (5) and the mean temperature T₁ of the coating (1) in the zone (7) having the same surface area as said additional heating zone (5) and exactly opposite said additional heating zone (5) is at least 0°C, in particular +5°C.

7. The process as claimed in one of the preceding claims, such that the length of the laser line (4) is at least 0.8 m, in particular 1 m.

8. The process as claimed in one of the preceding claims, such that the or each additional heating means (6) is selected from radiant heating means, convective heating means, conductive heating means or any combination thereof.

9. The process as claimed in the preceding claim, such that the or each additional heating means (6) is a convective heating means, in particular nozzles blowing a hot gas.

10. The process as claimed in claim 8, such that the or each additional heating means (6) is an infrared lamp.

11. The process as claimed in one of the preceding claims, such that the coating (1) comprises at least one thin layer selected from metal layers, in particular based on silver or molybdenum, titanium oxide layers and transparent electrically conductive layers.

12. The process as claimed in one of the preceding claims, such that the maximum temperature to which each point of the coating (1) is subjected during the heat treatment is at least 300°C, in particular 400°C.

13. A process for obtaining a substrate (2) provided with a coating (1) on at least one portion of a first face (F1) comprising a step of depositing said coating (1) on said first face (F1) then a step of heat treatment of said coating (1) according to the process of one of claims 1 to 13.

14. A device for implementing the process as claimed in one of claims 1 to 13, comprising at least one laser source (8), forming and redirecting means capable of generating a laser radiation (3) focused on a coating (1), deposited on a first face (F1) of a substrate (2), in the form of a laser line (4) extending along a first direction (D1), displacement means suitable for creating, during operation, a relative displacement movement between said substrate (2) and said laser line (1), and additional heating means (6) positioned on the side opposite said laser line (4) with respect to said substrate (2) suitable for locally heating the second face (F2) of said substrate (2) at a temperature of at least 30°C over an additional heating zone (5) extending facing said laser line (4) over a length of at least 10 cm, along said second direction (D2).
